Europäisches Patentamt

European Patent Office

Office européen des brevets

(11) Veröffentlichungsnummer: **0 482 432 A2**

(12) **EUROPÄISCHE PATENTANMELDUNG**

(21) Anmeldenummer: **91117257.5**

(22) Anmeldetag: **10.10.91**

(51) Int. Cl.5: **B23K 7/08**

(30) Priorität: **23.10.90 DE 4033618**

(43) Veröffentlichungstag der Anmeldung:
**29.04.92 Patentblatt 92/18**

(84) Benannte Vertragsstaaten:
**BE DE ES FR GB IT NL SE**

(71) Anmelder: **MESSER GRIESHEIM GMBH**
**Hanauer Landstrasse 330**
**W-6000 Frankfurt/Main 1(DE)**

(72) Erfinder: **Agel, Manfred**
**Gleimstrasse 1**
**W-6000 Frankfurt/Main(DE)**
Erfinder: **Gollwitz, Karl**
**Offenthaler Strasse 7**
**W-6073 Egelsbach(DE)**
Erfinder: **Gutermann, Traugott**
**Am Lerchenberg 9**
**W-6074 Rödermark(DE)**
Erfinder: **Sonnenborn, Klaus**
**Leharstrasse 4**
**W-6082 Mörfelden/Walldorf(DE)**

(54) **Verfahren zum Unterwasserschneiden.**

(57) Die Erfindung betrifft ein Verfahren zum Unterwasserschneiden mit einem Gasbrenner, wobei ein Gasstrahl in einen Bereich zwischen den Düsenöffnungen und der Werkstückoberfläche (18) gerichtet wird.

Fig. 1

EP 0 482 432 A2

Die vorliegende Erfindung betrifft ein Verfahren zum Unterwasserschneiden nach dem Oberbegriff des Anspruches 1 und einem Gasbrenner zur Durchführung des Verfahrens nach dem Oberbegriff des Anspruches 5.

Das autogene Brennschneiden besitzt seit seiner Einführung im Jahre 1904 die mit Abstand größte Bedeutung in der metallverarbeitenden Industrie. Es wird eingesetzt zum Trennen für um- und niedrig legierte Stähle mit Blechdicken von 2 bis 3000 mm. Bei dem bekannten autogenen Schneidverfahren werden eine Vielzahl von Gasbrennern verwendet, um plattenförmige Werkstükke auf die gewünschte Form zu schneiden. Sie werden weiterhin eingesetzt zum Säumen von Halbzeugen, Profilschneiden von geometrisch komplizierten Strukturen und besonders zur Schweißnahtvorbereitung, wo 75% autogen brenngeschnitten wird.

Für das Bedienungspersonal von Brennschneidanlagen ist die gesundheitliche Gefährdung durch Emissionen des Schneidprozesses allerdings hoch. Belastungen durch Lärm, Gas und partikelförmige Stoffe können auftreten. Deshalb und wegen der Gefährdung durch toxische Gase wie Stickoxid werden kostenintensive Sekundärschutzmaßnahmen bei autogenen Brennschneidanlagen eingesetzt, beispielsweise Flüssigkeitsduschen und Flüssigkeitssprüheinrichtungen oder Absaugtische, in Verbindung mit Filteranlagen (US-PS 3,743,259, Gbm 8 622 740).

Zu Bergungsarbeiten oder zum Abwracken von Schiffen wurden zwar im ersten Drittel des 20.Jahrhunderts autogene Brennschnitte unter Wasser durchgeführt. Die hierzu entwickelten Unterwasser-Schneidbrenner werden jedoch manuell geführt. Schnittgüten entsprechend DIN 2310 Teil 3, Güteklasse 1 und Schnittgeschwindigkeit müssen bei derartigen in offenen Gewässern ausgeführten Arbeiten nicht beachtet werden.

Der Erfindung liegt daher die Aufgabe zugrunde, ein Verfahren anzugeben, mittels dem der Gasbrenner unter Wasser gezündet und zum thermischen Trennen eingesetzt werden können.

Diese Aufgabe wird erfindungsgemäß durch die kennzeichnenden Merkmale des Anspruches 1 gelöst.

Das Unterwasserschneiden mittels Plasmaschneidbrenner ist seit ca. 20 Jahren bekannt. Ein Unterwasserschneiden für das maschinelle autogene Brennschneiden wurde jedoch nie in Betracht gezogen, da die mit der Gasflamme erzeugte Wärmeenergie wesentlich geringer ist, so daß der Einfluß der Flüssigkeit auf die Wärmeabfuhr der Bearbeitungsstelle (Heiz- und Schneidstelle) des Werkstückes eine wesentlich größere Bedeutung auf die Schneidleistung hat. Der Plasmaschneidbrenner ist hierbei von Gaskappen umgeben, mittels denen den Plasmaschneidstrahl vollständig umgebende Hüllgas- und/oder Wasserglocken erzeugt werden.

Durch die Erfindung wird die Zündsicherheit des Gasbrenners unter Wasser erhöht, weil durch den seitlich unter einem stumpfen Winkel unter den Austrittskanal der Zündflamme gerichteten Gasstrahl ein wasserfreier Hohlraum geschaffen wird, der einen Austritt der im Schneidsauerstoffkanal gezündeten Zündflamme ermöglicht. Über eine mit der zentrischen Schneidsauerstoffzuführung verbundenen Zündbrenngasgemischzuführung strömt vor dem Absenken des Gasbrenners unter die Wasseroberfläche Zündsauerstoff. Mit dem Absenken des Gasbrenners wird der aus der Gasstrahldüse ausströmende Gasstrahl mit geringem Druck zugeschaltet, der beim Erreichen der vorgegebenen Brennerhöhe über der Werkstückoberfläche unterhalb des Wasserspiegels erhöht wird. Das Heizgas wird eingeschaltet, das Zündbrenngas zugeschaltet und das Zündgasgemisch im Schneidsauerstoffkanal mittels einer elektrischen Zündeinrichtung gezündet. Die Zündflamme tritt aus dem Schneidsauerstoffkanal in den durch den Gasstrahl erzeugten wasserfreien Bereich und zündet die konzentrisch um den Schneidsauerstoffkanal strömenden Heizgase. Nach einer vorgegebenen Zeit, die ausreicht den Werkstoff des Werkstücks auf die für die exotherme Verbrennung erforderlich Temperatur aufzuheizen, wird der Schneidsauerstoff zugeschaltet und gleichzeitig der Zündsauerstoff abgeschaltet. Gleichzeitig wird der Druck des Gasstrahls auf einen niedrigeren Betrag reduziert.

Durch die Erfindung wird eine 100%ige Zündsicherheit unter Wasser erreicht. Die bei geringen Druck des Gasstrahls geschnittenen Werkstücke wiesen eine hohe Qualität der Schnittflächen und der Schneidkanten auf. Dies wird in dem geringen Sauerstoffdruck während des Schneidens und in der seitlichen Zuführung des Gasstrahls unter einem stumpfen Winkel erreicht, da ein Auftreffen des Gasstrahls auf die Werkstückoberfläche im Bereich der Flammen und hierdurch eine Bewegung der Flammen vermieden wird. Hinzu kommt, daß das Verfahren nach der Erfindung mit wesentlich geringerem Sauerstoffmengen als sie bei Hüllgasglocken oder -strömen erforderlich sind, betrieben werden kann, wodurch Wasserbewegungen und auch die Schwingungseigenschaft der Brennerhalter und Werkstückauflagevorrichtungen verringert werden.

Die Gasstrahldüse ist um die Mittelachse des Brenners um 360° beweglich oder fest positioniert gelagert. Der oder die Gasstrahlen sind vorteilhaft unter einem Winkel von 10° bis 45° zur Düsenstirnfläche so geneigt, daß zum einen vor der Schneiddüse ein wasserfreier Hohlraum entsteht, um das austretende Brenngas-Sauerstoff-Gemisch gegendruckfrei zu zünden und zum anderen zwischen Schneiddüse und Wekstückoberfläche eine Wasserverdrängung entsteht, die so groß ist, daß eine einwandfreie Wärmeübertragung aus der Heizflamme auf die Blechoberfläche möglich ist.

Dadurch, daß die Gasstrahldüse die Schneid- oder Heizdüse wenigstens an den Stirnflächen formschlüssig umgibt, wird vorteilhaft ein Zurückbrennen von Sekundärflammengasen zwischen der Gasstrahldüse und der Heiz- oder Schneiddüse vermieden. Hierdurch kann auf eine Kühlung der Düsen verzichtet werden. Vorteilhaft kann somit die Menge des Gasstrahles ausschließlich an die Wasserverdrängungserfordernisse angepaßt werden, weil die Zusatzfunktion Kühlung entfällt. Es werden nur geringe Mengen eines Gases durch die Gasstrahldüse verbraucht.

Weitere vorteilhafte Ausbildungen sind in den Unteransprüchen genannt.

Ein Ausführungsbeispiel der Erfindung ist in der Zeichnung dargestellt und wird im folgenden näher beschrieben.

Es zeigen

Fig.1  eine thermische Schneideinrichtung mit einem Gasbrenner nach der Erfindung in schematischer Darstellung,

Fig.2  eine Draufsicht auf die Ausströmseite des Gasbrenners mit zugeordneter Gasstrahldüse.

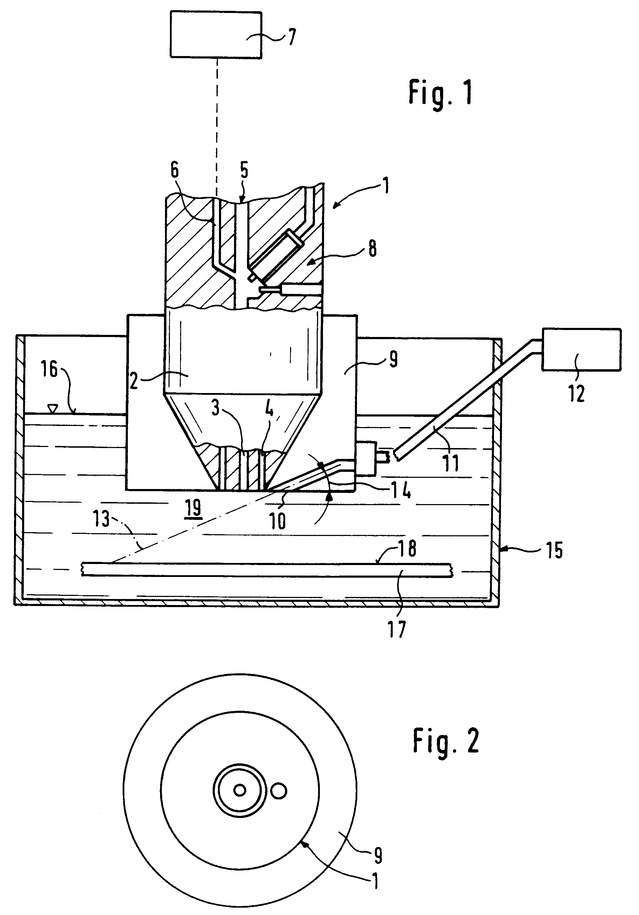

In der Fig.1 ist ein Gasbrenner zum thermischen Brennschneiden mit 1 bezeichnet. Der nur schematisch dargestellte Gasbrenner weist eine Schneiddüse 2 auf, die einen zentrischen Schneidsauerstoffkanal 3 aufweist. Dieser Kanal 3 ist konzentrisch ringförmig von Heizgaskanälen 4 umgeben. Die Heizgaskanäle 4 stehen mit einem nicht näher dargestellten Injektor in Verbindung, der eingangsseitig an eine Heizsauerstoff- und Brenngasversorgung angeschlossen ist.

Es ist selbstverständlich auch möglich, anstelle des Injektors einen Gasbrenner mit gasemischenden Düsen, bei denen die Mischung von Brenngas und Heizsauerstoff in der Heizdüse selbst stattfindet, einzusetzen. Derartige Düsen und Brenner sind bekannt und brauchen daher nicht näher beschrieben zu werden.

In bevorzugter Ausbildung des Gasbrenners 1 mündet in die mit dem Schneidsauerstoffkanal 3 verbundene Schneidsauerstoffzuführung 5 eine separate Zündgasgemischzuführung 6, die über eine Regeleinheit 7 mit einer Heizgas- und Brenngasversorgung verbunden ist. Der Ausströmöffnung der Zündgasgemischzuführung 6 gegenüberliegend ist eine mit der Schneisauerstoffzuführung 5 in Verbindung stehendes elektrisches Zündgerät 8 innerhalb des Gasbrenners 1 angeordnet. Das Zündgerät besteht im wesentlichen aus einer Zündelektrode mit gegenüberliegendem Massestift, mit denen ein Zündfunke erzeugt wird.

Die Schneiddüse 2 ist von einer Gasstrahldüse 9 formschlüssig umgeben. In der Gasstrahldüse 9 ist eine Austrittsöffnung 10 vorgesehen, die über Mittel 11 mit einer Sauerstoffversorgung 12 verbunden ist. Die Achse 13 der Ausströmöffnung 10 verläuft unter einem Winkel 14 zwischen 10° und 45°, vorzugsweise jedoch unter einem Winkel von 25°. Das dem Gasbrenner 1 zugeordnete Wasserbecken ist in seiner Gesamtheit mit 15, die Wasseroberfläche mit 16 bezeichnet. Aufbau und Funktionsweise derartiger Wasserbecken sind bekannt und brauchen daher nicht näher erläutert werden.

Die Einrichtung arbeitet wie folgt: Der oberhalb der Wasseroberfläche 16 angeordnete Gasbrenner 1 mit der ihm zugeordneten Gasstrahldüse 9 verfährt über die Wasseroberfläche. Unterhalb des Wassers ist das Werkstück 17 auf nicht näher dargestellten Unterlagen angeordnet und - falls erforderlich - auf der Unterlage aufgespannt. Über die nicht näher dargesellte Brennschneidmaschinensteuerung erhält der Gasbrenner 1 das Signal Zündsauerstoff ein. Zündsauerstoff strömt nun über die Zündgasgemischzuführung 6 in den Schneidsauerstoffkanal 3 und tritt aus diesem aus. Gleichzeitig hierzu besteht die Möglichkeit, den Heizsauerstoff einzuschalten, der dann aus den Heizgaskanälen 4 austritt. Der aus der Austrittsöffnung 10 der Gastrahldüse austretende Sauerstoffstrahl strömt oberhalb des Wasserspiegels 16 nur mit einem gerihgen Druck. Der Gasbrenner 1 erhält von der Steuerung das Signal absenken und taucht in das Wasserbecken 15 ein bis von einem nicht näher dargestellten Sensor die Rückmeldung an die Steuerung erfolgt, daß der Gasbrenner 1 an der Kante des Werkstücks 17 in "richtiger" Höhe über dem Werkstück positioniert ist. Danach wird mittels der Steuerung das nicht näher dargestellte Magnetventil der Mittel 11 geöffnet, so daß ein Gasstrahl, vorzugsweise ein Sauerstoffstrahl, unter einem stumpfen Winkel in den Bereich zwischen den Düsenöffnungen der Düse 2 und der Werkstückoberfläche 18 strömt. Der seitlich in diesen Bereich 19 gerichtete Strahl trifft vorteilhaft so auf die Werkstückoberfläche auf, daß unter der Düsenstirnfläche das Wasser verdrängt wird und die Heizflamme voll zur Wirkung kommt. Der Auftreffwinkel zwischen 10 und 45° führt zu einem Abströmwinkel, der von den Schneiddüsenöffnungen und damit von der Zündflamme und den Heizgasen bzw. der Heizflamme wegströmt. Gleichzeitig wird durch den Sauerstoffstrahl im Bereich der Kanäle 3 und 4 eine wasserfreie Zone geschaffen, die nicht von Turbulenzen beeinflußt wird. Der Gasstrahl kann hierbei im wesentlichen mittig auf den Austrittskanal 3 der Zündflamme oder tangential zum Austrittskanal 3 der Zündflamme gerichtet werden. Das Zündbrenngas und das Heizbrenngas wird zugeschaltet und das Zündgerät erhält den Steuerbefehl zünden. Über ein von dem Zündgerät 8 erzeugten Zündfunken zündet das Zündgasgemisch und tritt aus dem Schneidsauerstoffkanal 3 aus. Es zündet unterhalb der Wasseroberfläche das aus den Heizgaskanälen 4 austretende Heizgasgemisch. Das Zündbrenngas wird abgeschaltet und nach genügender örtlicher Temperatursteigerung am Werkstück 17 wird das Schneidsauerstoffventil geöffnet und damit der Brennschneidvorgang eingeleitet. Mit dem Einschalten des Schneidsauerstoffs wird auch der Zündsauerstoff abgeschaltet und der Druck des aus der Gasstrahldüse austretenden Sauerstoffstrahls auf einen niedrigeren Betrag reduziert. Der Gasbrenner 1 wird nunmehr über nicht näher dargestellte Antriebe entsprechend der vorgegebenen Schneidform über der Werkstückoberfläche 18 verfahren.

**Patentansprüche**

1. Verfahren zum Unterwasserschneiden mit einem Gasbrenner,
dadurch gekennzeichnet,
daß ein Gastrahl in einen Bereich zwischen den Düsenöffnungen und der Werkstückoberfläche (18) gerichtet wird.

2. Verfahren nach Anspruch 1,
dadurch gekennzeichnet,
daß als Gas Sauerstoff verwendet wird.

3. Verfahren nach Anpruch 1 oder 2,
dadurch gekennzeichnet,
daß der Gasstrahl unter einem Winkel (14) im wesentlichen seitlich auf die Mitte des Austrittskanals (3) der Zündflamme oder tangential zum Austrittskanal (3) der Zündflamme gerichtet wird.

4. Verfahren nach einem der Ansprüche 1 bis 3,
dadurch gekennzeichnet,
daß der Austrittskanal (3) für die Zündflamme im Zentrum der Schneiddüse (2) angeordnet ist.

5. Gasbrenner mit einer Schneiddüse zur Durchführung des Verfahrens nach einem der Ansprüche 1 bis 4,
dadurch gekennzeichnet,
daß die Schneid- oder Heizdüse (2) von einer Gasstrahldüse (9) umgeben ist, die eine in den Bereich zwischen den Düsenöffnungen und der Werkstückoberfläche (18) gerichtete Austrittsöffnung (10) für einen Gasstrahl aufweist.

6. Gasbrenner nach Anspruch 5,
dadurch gekennzeichnet,
daß die Achse (13) der Austrittsöffnung (10) zwischen 10 und 45° verläuft.

7. Gasbrenner nach Anspruch 5 oder 6,
dadurch gekennzeichnet,
daß die Achse (13) der Austrittsöffnung (10) unter einem Winkel von 25° verläuft.

8. Gasbrenner nach einem der Ansprüche 5 bis 7,
dadurch gekennzeichnet,
daß die Gasstrahldüse (9) die Schneid- oder Heizdüse (2) wenigstens an der Stirnseite formschlüssig umgibt.

Fig. 1

Fig. 2